# EUROPÄISCHE PATENTSCHRIFT

(11) **EP 1 384 883 B1**
(45) Veröffentlichungstag und Bekanntmachung des Hinweises auf die Patenterteilung: **05.04.2006**
(21) Anmeldenummer: 02026381.0
(22) Anmeldetag: 25.11.2002
(51) Int. Cl.: F03D 1/00

(54) **Transporteinrichtung für Gondeleinheiten von Offshore-Windturbinen und zugehöriges Verfahren**
Lifting barge for transporting nacelles of offshore wind turbines and associated method
Barge de transport pour nacelles d'éoliennes marines et procédé associé

(30) Priorität: 22.07.2002 DE 10233227
(43) Veröffentlichungstag der Anmeldung: 28.01.2004
(73) Patentinhaber: PLAMBECK, Norbert, 27472 Cuxhaven (DE)
(72) Erfinder: PLAMBECK, Norbert, 27472 Cuxhaven (DE)
(74) Vertreter: Manitz, Finsterwald & Partner GbR

(56) Entgegenhaltungen:
- EP-A- 1 101 935
- WO-A-02/48547
- DE-A- 19 741 988
- DE-U- 20 010 086
- US-A- 3 790 009
- US-A- 4 311 434

## Beschreibung

Die Erfindung betrifft eine Transporteinrichtung zum seeseitigen Transport sowie zur landseitigen und seeseitigen Übergabe und Übernahme von komplettierten, jeweils Maschinenhaus, Nabe und Rotorblätter umfassenden Gondeleinheiten an stehenden Offshore-Windenergieanlagen mit den Merkmalen des Anspruchs 1. Außerdem bettrifft die Erfindung ein Transport - sowie Übergabe - und Übernahme verfahren für derartige Gondeleinheit mit den Merkmalen des Anspruchs 9.

Offshore-Windenergieanlagen kommt zunehmend größere Bedeutung zu, da die auf See herrschenden Windverhältnisse konstanter als. an Land sind und die laizdschaftlichen Beeinträchtigungen durch Windparks sowie die von derartigen Windparks ausgehenden Geräuschentwicklungen auf See keine Rolle spielen.

Bei der Realisierung derartiger Vorhaben stellen nicht nur der Transport und die Errichtung von Offshore-Windenergieanlagen eine der großen Herausforderungen dar, sondern es kommt insbesondere auch der Wartung und Instandhaltung und damit der Aufrechterhaltung der Funktionsfähigkeit der einzelnen Offshore-Windenergieanlagen im Hinblick auf die geforderte Wirtschaftlichkeit von Windparks eine entscheidende Bedeutung zu.

Der Transport sowie die seeseitige Errichtung von komplettierten Offshore-Windenergieanlagen ist beispielsweise in den unveröffentlichten deutschen Patentanmeldung 101 62 226.0, 101 62 225.2 sowie 101 63 538.9 beschrieben. Außerdem wird diesbezürglich verwiesen auf EP-A-1101935, WO 02/48547A und DE20010086U. US 4,311434 beschreibt die vertikaleVerführbarkeit einer Gondel einer Windenergieanlagen an einem ortfesten Turm.

Diese Patentanmeldungen betreffen das Transportieren und Montieren von kompletten, betriebsfertigen Offshore-Windenergieanlagen mittels einer schwimmfähigen Hubplattform, die in der Lage ist, wenigstens eine komplettierte, im Wesentlichen aus Turm, Maschinenhaus, Nabe und Rotorblättern bestehende Offshore-Windenergieanlage aufzunehmen und aufrecht stehend oder liegend auf See zu transportieren. Mit derartigen Hubplattformen ist nicht nur die Neuerrichtung von Windparks, sondern auch der Austausch einzelner Offshore-Windenergieanlagen oder deren Rücktransport an Land zu Reparaturzwecken vergleichsweise schnell und einfach möglich.

Nachdem die Aufnahmevorrichtungen dieser Hubplattformen jedoch für das Zusammenwirken mit dem Turm der Windenergieanlage ausgelegt sind, ist der Transport alleine derjenigen Baugruppe - nämlich der das Maschinenhaus, die Nabe und die Rotorblätter umfassenden Gondeleinheit -, bei der die Wahrscheinlichkeit für das Auftreten einer Funktionsstörung und daher die Notwendigkeit eines Austausches oder einer Reparatur wesentlich größer ist als bei dem Turm, mit diesen Hubplattformen nicht möglich.

Aufgabe der Erfindung ist es daher, eine Möglichkeit zu schaffen, die Aufrechterhaltung der Funktionsfähigkeit von Offshore-Windenergieanlagen auf besonders wirtschaftliche und logistisch optimale Art und Weise zu realisieren.

Die Lösung dieser Aufgabe erfolgt durch die Merkmale des Anspruchs 1 und insbesondere dadurch, dass die Transporteinrichtung wenigstens eine Mäklereinheit und wenigstens eine an der Mäklereinheit vorgesehene Aufnahme- und Halteeinrichtung aufweist, die zur kranlosen Übernahme bzw. Übergabe einer turmlosen Gondeleinheit von einem bzw. an einen landseitig oder seeseitig errichteten, aufrecht stehenden Turm einer Offshorer Windenergieanlage sowie zur transportsicheren Halterung einer übernommenen Gondeleinheit ausgebildet ist.

Die Erfindung stellt eine speziell ausgebildete Transporteinrichtung bereit, die in der Lage ist, sowohl an einem landseitig als auch an einem seeseitig errichteten, aufrecht stehenden Turm einer Offshore-Windenergieanlage die Gondeleinheit zu montieren oder zu demontieren, wobei hierfür aufgrund der auf der Transporteinrichtung befindlichen Mäklereinheit weder an Land noch auf See Kräne erforderlich sind.

Soll beispielsweise die Gondeleinheit einer auf See im Einsatz befindlichen Offshore-Windenergieanlage ausgetauscht oder zu Reparaturzwecken an Land gebracht werden, so ist es nicht erforderlich, die komplette Anlage einschließlich des Turmes zu verschiffen, sondern es braucht lediglich die Gondeleinheit von der Mäklereinheit der erfindungsgemäßen Hubplattform übernommen zu werden, während der Turm auf See verbleibt und gegebenenfalls im Anschluss an die Demontage der an Land zu bringenden Gondeleinheit mit einer anderen, funktionsfähigen Gondeleinheit versehen wird. Totzeiten werden hierdurch in vorteilhafter Weise minimiert, was die Wirtschaftlichkeit des betreffenden Windparks erhöht.

Vorteilhafte Ausgestaltungen der Erfindung sind in den Unteransprüchen, der Beschreibung sowie der Zeichnung angegeben.

Gemäß einem möglichen Ausführungsbeispiel ist die Transporteinrichtung als schwimmfähige Hubplattform ausgebildet. Dies kann für bestimmte Anwendungsfälle das bevorzugte Transportmittel sein. Zwingend ist eine derartige Ausgestaltung der erfindungsgemäßen Transporteinrichtung jedoch nicht. Grundsätzlich kommt für die erfindungsgemäße Transporteinrichtung jedes geeignete Grundprinzip eines Fahrzeugs bzw. Transportmittels in Frage.

Gemäß einer weiteren bevorzugten Ausgestaltung ist die Aufnahme- und Halteeinrichtung relativ zur Mäklereinheit zwischen einer oberen Übergabe- und Übernahmeposition sowie einer unteren Transportposition vertikal verfahrbar.

Hierdurch kann die Gondeleinheit im Anschluss an ihre Übernahme mittels der Aufnahme- und Halteeinrichtung in die besonders transportsichere, aufgrund des resultierenden niedrigeren Schwerpunkts des Gesamtsystems vorteilhafte untere Transportposition verfahren werden.

Ferner wird vorgeschlagen, dass die Mäklereinheit auf der Transporteinrichtung horizontal verfahrbar ist.

Dies ermöglicht es, die Aufnahme- und Halteeinrichtung der Mäklereinheit in die gewünschte Position relativ zum Turm der Windenergieanlage zu bringen, ohne hierzu die Transporteinrichtung bewegen zu müssen. Die horizontale Verfahrbarkeit der Mäklereinheit ermöglicht so gewissermaßen eine "Feinpositionierung" bei verankerter oder feststehender Transporteinrichtung.

Ein weiteres Ausführungsbeispiel der Erfindung zeichnet sich dadurch aus, dass wenigstens ein Paar von insbesondere rückseitig einander zugewandten Mäklereinheiten vorgesehen ist.

Eine derartige Transporteinrichtung ist zur gleichzeitigen Aufnahme von mehreren Gondeleinheiten in der Lage. Mit einer solchen Transporteinrichtung ist es folglich beispielsweise möglich, eine einsatzfähige Gondeleinheit zu einer seeseitig errichteten Offshore-Windenergieanlage zu verschiffen, dort zunächst mittels der freien Mäklereinheit eine defekte oder zu wartende Gondeleinheit aufzunehmen und unmittelbar im Anschluss daran die mitgebrachte einsatzrahige Gondeleinheit am frei gewordenen Turm zu montieren. Die Ausfallzeit der betreffenden Windenergieanlage wird hierdurch auf ein Minimum reduziert.

Die Erfindung wird im Folgenden beispielhaft unter Bezugnahme auf die Zeichnung beschrieben. Es zeigen:
- Fig. 1: eine schematische Darstellung zur Erläuterung des Funktionsprinzips einer zu Transportzwecken in Verbindung mit Offshore-Windenergieanlagen einsetzbaren Transporteinrichtung in Form einer schwimmfähigen Hubplattform, und
- Fig. 2: schematisch ein Ausführungsbeispiel einer Transporteinrichtung in Form einer schwimmfähigen Hubplattform gemäß der Erfindung.

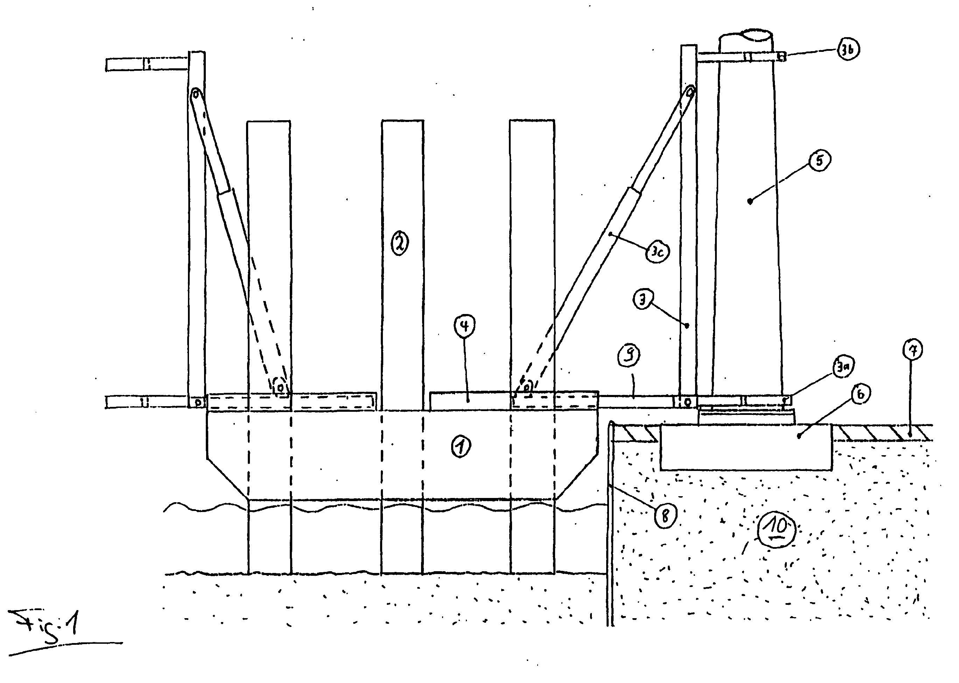

Die in Fig. 1 dargestellte Hubplattform 1 stellt ein Beispiel für eine Transporteinrichtung gemäß der Erfindung dar. Die Transporteinrichtung ist zur Aufnahme kompletter Offshore-Windenergieanlagen ausgebildet und hierzu mit Aufnahmeeinrichtungen 3a, 3b versehen, die jeweils mit dem Turm 5 der Windenergieanlage zusammenwirken. Der Transport kompletter Windenergieanlagen ist nicht Gegenstand der vorliegenden Erfindung, so dass auf die mit dem Turm 5 zusammenwirkenden Einrichtungen 3a, 3b der Hubplattform 1 nicht näher eingegangen wird.

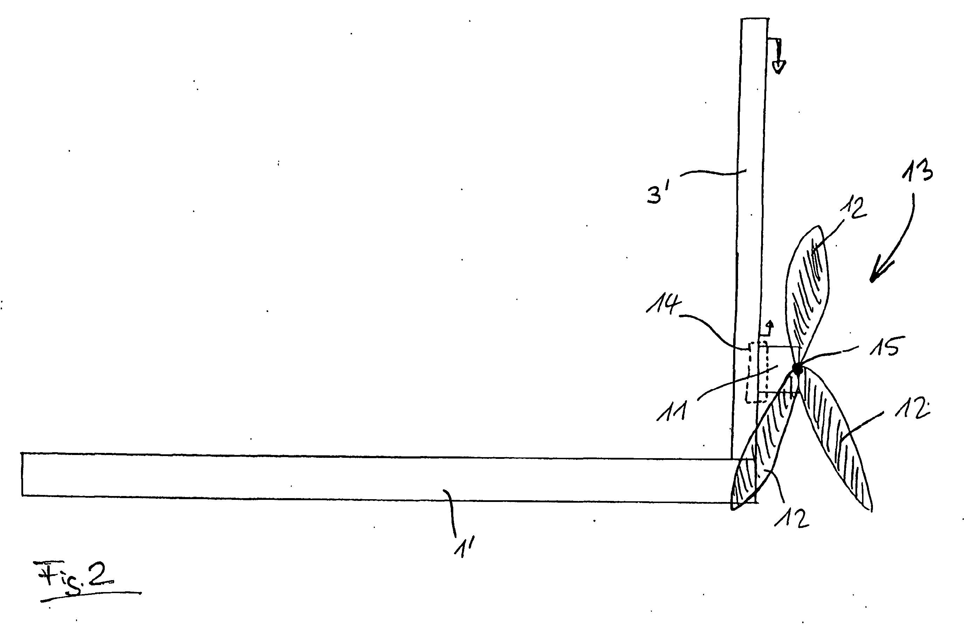

Die Hubplattform 1 stellt jedoch hinsichtlich anderer technischer Einzelheiten ein Beispiel für die Ausstattung einer erfindungsgemäßen Transporteinrichtung, wie sie an anderer Stelle in Verbindung mit Fig. 2 beschrieben wird, und insoweit ein Ausführungsbeispiel der Erfindung dar. Die auch bei einer gemäß der Erfindung ausgebildeten Hubplattform realisierbaren Einrichtungen werden daher im Folgenden anhand der Hubplattform gemäß Fig. 1 beschrieben, wobei nichtsdestoweniger auch bei einer erfindungsgemäßen Hubplattform zusätzlich die turmspezifischen Einrichtungen 3a, 3b fest installiert sein oder im Bedarfsfall vorgesehen werden können, mit denen einen kraftschlüssige Verbindung zwischen der Hubplattform 1 und dem Turm 5 einer Windenergieanlage hergestellt werden kann.

Die schwimmfähige, mit einem Eigenantrieb versehene, d.h. selbstfahrende, und/oder in Form einer Schleppeinheit verwendbare Hubplattform 1 ist mittels mehrerer vertikal verfahrbarer Hubbeine 2 vor einer Verschiffungspier 10 positioniert.

Mit der Hubplattform 1 können komplette Windenergieanlagen übernommen werden, die in dem dargestellten Beispiel auf einem Montage- und Testfundament 6 stehen, das auf der seeseitig durch eine Spundwand 8 begrenzten Pier 10 errichtet ist. Auf dem Fundament 6 kann eine Windenergieanlage funktionstüchtig aufgebaut und auch getestet werden, wobei der Aufbau mittels anhand zur Verfügung stehenden Einrichtungen, insbesondere Kränen, erfolgt, die aufgrund einer auf der Pier 10 vorgesehenen Schwerlast-Oberflächenbefestigung 7 an das Fundament 6 herangefahren werden können.

Die Hubplattform 1 ist mit zwei so genannten Mäklereinheiten ausgerüstet, die jeweils zumindest einen horizontal mittels einer Ausschubeinheit 4 verfahrbaren Basisträger 9, wenigstens einen im Wesentlichen vertikal verlaufenden Mäkler 3 sowie zumindest einen Führungs- und Justierstempel 3c umfassen, welcher in der dargestellten Position zwischen dem oberen Bereich des Mäklers 3 und dem rückseitigen Ende des Basisträgers 9 verläuft und an seinen Enden jeweils gelenkig gelagert ist. Der Führungs- und Justierstempel 3c besteht bevorzugt aus einer teleskopartig ausgebildeten Einheit, die vorzugsweise hydraulisch betätigt werden kann.

Mittels der beschriebenen Einrichtungen kann der Mäkler 3 grundsätzlich in allen Richtungen bewegt werden, wobei auch die Möglichkeit zu einem geringfügigen Anheben und Absenken in Bezug auf die Hubplattform 1 gegeben ist, um eine "Feinpositionierung" ohne Bewegung der Hubplattform 1 auch in vertikaler Richtung zu gestatten.

In Fig. 2 sind die Einrichtungen zum Bewegen des Mäklers 3' sowie die Hubbeine zum Anheben und Absenken der Hubplattform 1' nicht dargestellt. Diesbezüglich kann die Hubplattform 1' wie in Fig. 1 ausgebildet sein.

Der vertikal verlaufende Mäkler 3' weist eine Aufnahme- und Halteeinrichtung 14 auf, mit der eine kraftschlüssige Verbindung zu der lediglich schematisch dargestellten, Maschinenhaus 11, Nabe 15 und Rotorblätter 12 umfassenden Gondeleinheit 13 einer Offshore-Windenergieanlage hergestellt werden kann.

Hierzu kann die Aufnahme- und Halteeinrichtung 14 beispielsweise einen genormten oder universellen Kopplungsabschnitt aufweisen, der mit demjenigen Bereich der Gondeleinheit 13 koppelbar ist, über den die Gondeleinheit 13 mit einem entsprechenden Kopplungsabschnitt oder Montagebereich des Turmes 5 der Windenergieanlage verburiden wird.

Wie in Fig. 2 durch die Pfeile angedeutet ist, kann die Aufnahme- und Halteeinrichtung 14 zusammen mit einer daran gehalterten Gondeleinheit 13 relativ zum Mäkler 3' auf- und abbewegt werden.

Zur Übergabe bzw. Übernahme einer Gondeleinheit 14 an einem aufrecht stehenden Turm 5 einer Offshore-Windenergieanlage, der sich entweder an Land an einer Verschiffungspier 10 oder auf See befindet, wird zunächst die schwimmfähige Hubplattform 1' in die jeweils erforderliche Position verbracht und dann mittels der Hubbeine 2 (vgl. Fig. 1) ortsfest positioniert sowie in vertikaler Richtung auf das jeweils benötigte Niveau gebracht. Daraufhin wird die Aufnahme- und Halteeinrichtung 14 aus der unteren Transportposition in die obere Übergabe- bzw. Übernahmeposition am Mäkler 3' verfahren, um eine abzutransportierende Gondeleinheit 13 von der betreffenden Offshore-Windenergieanlage zu übernehmen oder eine herantransportierte Gondeleinheit 13 an den gondellosen Turm 5 zu übergeben.

Der Mäkler 3' kann zusätzlich zu der Aufnahme- und Halteeinrichtung 14 für Gondeleinheiten 13 die in Verbindung mit Fig. 1 genannten Aufnahmevorrichtungen 3a, 3b zur kraftschlüssigen Verbindung mit dem Turm einer Offshore-Windenergieanlage aufweisen, wodurch ein Mehrzweck-Mäkler bereitgestellt wird, mit dem wahlweise entweder komplettierte Windenergieanlagen oder lediglich deren Gondeleinheiten 13 transportiert werden können. Dabei ist es möglich, den Mäkler 3' derart auszulegen, dass er wahlweise je nach gewünschtem Transportzweck entweder mit der Aufnahme- und Halteeinrichtung 14 für eine Göndeleinheit 13 oder mit den Aufnahmevorrichtungen 3a, 3b für den Turm 5 ausgestattet wird.

### Bezugszeichenliste

- 1,1': Transporteinrichtung, Hubplattform
- 2: Hubbein
- 3,3': Mäkler
- 3a: untere Aufnahmeeinrichtung
- 3b: obere Aufnahmeeinrichtung
- 3c: Führungs- und Justierstempel
- 4: Ausschubeinheit
- 5: Turm
- 6: Montage- und Testfundament
- 7: Schwerlast-Oberflächenbefestigung .
- 8: Spundwand
- 9: Basisträger
- 10: Pier
- 11: Maschinenhaus
- 12: Rotorblatt
- 13: Gondeleinheit
- 14: Aufnahme- und Halteeinrichtung
- 15: Nabe

## Patentansprüche

1. Transporteinrichtung (1; 1') zum seeseitigen Transport sowie zur landseitigen und seeseitigen Übergabe und Übernahme von komplettierten, jeweils Maschinenhaus (11), Nabe (15) und Rotorblätter (12) umfassenden Gondeleinheiten (13) an stehenden Offshore-Windenergieanlagen, mit zumindest einer auf der Hubplattform (1;1) vorgesehenen Mäklereinheit (3, 3c, 9; 3') und wenigstens einer an der Mäklereinheit vorgesehenen Aufnahme- und Halteeinrichtung (14) zur kranlosen Übernahme und Übergabe einer turmlosen Gondeleinheit (13) von einem bzw. an einen landseitig oder seeseitig errichteten, aufrecht stehenden Turm (5) einer Offshore-Windenergieanlage sowie zur transportsicheren Halterung einer übernommenen Gondeleinheit (13).

2. Transporteinrichtung nach Anspruch 1,
**dadurch gekennzeichnet,**
**dass** die Aufnahme- und Halteeinrichtung (14) relativ zur Mäklereinheit (3, 3c, 9; 3') zwischen einer oberen Übergabe- und Übernahme-position sowie einer unteren Transportposition vertikal verfahrbar ist.

3. Transporteinrichtung nach Anspruch 1 oder 2,
**dadurch gekennzeichnet,**
**dass** die Mäklereinheit (3, 3c, 9; 3') auf der Transporteinrichtung (1, 1') horizontal verfahrbar ist.

4. Transporteinrichtung nach einem der vorhergehenden Ansprüche,
**dadurch gekennzeichnet,**
**dass** wenigstens ein Paar von insbesondere rückseitig einander zugewandeten Mäklereinheiten vorgesehen ist.

5. Transporteinrichtung nach einem der vorhergehenden Ansprüche,
**dadurch gekennzeichnet,**
**dass** die Mäklereinheit zusätzlich wenigstens eine untere und eine obere Aufnahmevorrichtung (3a, 3b) zur kraftschlüssigen Verbindung mit dem Turm (5) einer Offshore-Windenergieanlage und zur kranlosen Überführung zumindest des Turmes (5) und bevorzugt einer komplettierten Offshore-Windenergieanlage in eine verriegelte Position auf der Transporteinrichtung (1, 1') aufweist.

6. Transporteinrichtung nach einem der vorhergehenden Ansprüche,
**dadurch gekennzeichnet**,
das sie mehrere vertikal verstellbare Hubbeine (2) aufweist, über die zur Übergabe und Übernahme einer Gondeleinheit (13) die Höhenposition der Mäklereinheit (3, 3c, 9; 3') an die Höhenposition eines am Turm (5) für die Gondeleinheit (13) vorgesehenen Montagebereiches anpassbar ist.

7. Transporteinrichtung nach einem der vorhergehenden Ansprüche,
**dadurch gekennzeichnet,**
**dass** sie selbstfahrend ausgebildet ist.

8. Transporteinrichtung nach einem der vorhergehenden Ansprüche,
**dadurch gekennzeichnet,**
**dass** sie als schwimmfähige Hubplattform ausgebildet ist.

9. Verfahren zum seeseitigen Transport sowie zur landseitigen und seeseitigen Übergabe und Übernahme von komplettierten, jeweils Maschinenhaus (11), Nabe (15) und Rotorblätter (12) umfassenden Gondeleinheiten (13) an stehenden Offshore-Windenergieanlagen, welches die Schritte umfasst,
- dass eine schwimmfähige Hubplattform (1; 1) in eine jeweils erforderliche Position verbracht und auf das jeweils benötigte Höhenniveau gebracht wird,
- eine Aufnahme- und Halteeinrichtung (14) an einer auf der Hubplattform (1; 1) vorgesehenen Mäklereinheit (3, 3c, 9; 3') aus einer unteren Transportposition in eine obere Übergabe- und Übernahmeposition verfahren wird, und
- mittels der Aufnahme- und Halteeinrichtung (14) kranlos eine abzutransportierende turmlose Gondeleinheit (13) übernommen oder eine heranzutransportierende turmlose Gondeleinheit (13) an einen gondellosen Turm (5) einer Offshore-Windenergieanlage übergeben wird.

## Revendications

1. Barge de transport (1 ; 1') pour le transport marin et la remise et la reprise à terre et en mer d'ensembles de nacelle (13) complétés comprenant chacun une salle de machines (11), un moyeu (15) et des pales de rotor (12) sur des installations d'énergie éolienne stationnaires offshore, comportant au moins un ensemble support intermédiaire (3, 3c, 9 ; 3') prévu sur la plateforme élévatrice (1 ; 1) et au moins un dispositif de réception et de maintien (14) prévu sur l'ensemble support intermédiaire et destiné à la reprise et à la remise sans grue d'un ensemble de nacelle (13), dépourvu de pylône, respectivement depuis et vers un pylône (5) dressé debout érigé à terre ou en mer d'une installation d'énergie éolienne offshore, et au maintien sûr pendant le transport d'un ensemble de nacelle repris (13).

2. Barge de transport selon la revendication 1,
**caractérisée en ce que**
le dispositif de réception et de maintien (14) est mobile verticalement par rapport à l'ensemble support intermédiaire (3, 3c, 9 ; 3') entre une position supérieure de remise et de reprise et une position inférieure de transport.

3. Barge de transport selon la revendication 1 ou 2,
**caractérisée en ce que**
l'ensemble support intermédiaire (3, 3c, 9; 3') est mobile horizontalement sur la barge de transport (1, 1').

4. Barge de transport selon l'une des revendications précédentes,
**caractérisée en ce que**
il est prévu au moins une paire d'ensembles supports intermédiaires tournés l'un vers l'autre en particulier du côté postérieur.

5. Barge de transport selon l'une des revendications précédentes,
**caractérisée en ce que**
l'ensemble support intermédiaire comprend en supplément au moins un dispositif de réception inférieur et au moins un dispositif de réception supérieur (3a, 3b) pour la liaison en coopération de forces avec le pylône (5) d'une installation d'énergie éolienne offshore et pour le transfert sans grue au moins du pylône (5) et de préférence d'une installation d'énergie éolienne offshore complétée jusque dans une position verrouillée sur la barge de transport (1, 1').

6. Barge de transport selon l'une des revendications précédentes,
**caractérisée en ce que**
elle comprend plusieurs pieds de levage (2) verticalement réglables via lesquels, en vue de la remise et de la reprise d'un ensemble de nacelle (13), la position en hauteur de l'ensemble support intermédiaire (3, 3c, 9 ; 3') est adaptable à la position en hauteur d'une zone de montage prévue sur le pylône (5) pour l'ensemble de nacelle (13).

7. Barge de transport selon l'une des revendications précédentes,
**caractérisée en ce que**
elle est réalisée automotrice.

8. Barge de transport selon l'une des revendications précédentes,
**caractérisée en ce que**
elle est réalisée sous forme de plateforme élévatrice flottante.

9. Procédé pour le transport marin et la remise et la reprise terrestres et marines d'ensembles de nacelle (13) complétés comprenant chacun une salle de turbines machines (11), un moyeu (15) et des pales de rotor (12) sur des installations d'énergie éolienne stationnaires offshore, comprenant les étapes consistant à
- déplacer une plateforme élévatrice flottante (1 ; 1') dans une position respective requise et à la placer au niveau de hauteur respectif nécessaire,
- déplacer un dispositif de réception et de maintien (14) situé sur un ensemble support intermédiaire (3, 3c, 9 ; 3') prévu sur la plateforme élévatrice (1 ; 1') depuis une position inférieure de transport jusque dans une position supérieure de remise et de reprise, et
- reprendre un ensemble de nacelle (13) dépourvu de pylône et à enlever, ou remettre à un pylône (5) dépourvu de nacelle d'une installation d'énergie éolienne offshore un ensemble de nacelle (13) dépourvu de pylône et à approcher, au moyen du dispositif de réception et de maintien (14) et sans grue.

## Claims

1. A transport device (1; 1') for the seaside transport and for the landside and seaside transfer and takeover of completed gondola units (13) including in each case a machinery pod (11), a hub (15) and rotor blades (12) at standing offshore wind energy plants, having at least one leader unit (3, 3c, 9; 3') provided at the lift platform (1; 1) and at least one receiving and holding device (14) provided at the leader unit for the craneless takeover and transfer of a towerless gondola unit (13) from or to a tower (5) of an offshore wind energy plant, said tower standing upright and erected at the landside or at the seaside, and for the holding secure for transport of a taken over gondola unit (13).

2. A transport device in accordance with claim 1, **characterised in that** the receiving and holding device (14) is vertically movable relative to the leader unit (3, 3c, 9; 3') between an upper transfer and takeover position and a lower transport position.

3. A transport device in accordance with claim 1 or claim 2, **characterised in that** the leader unit (3, 3c, 9; 3') is horizontally movable on the transport device (1, 1').

4. A transport device in accordance with any one of the preceding claims, **characterised in that** at least one pair of leader units, in particular leader units facing one another at the rear side, is provided.

5. A transport device in accordance with any one of the preceding claims, **characterised in that** the leader unit additionally has at least one lower and one upper receiving apparatus (3a, 3b) for the force-transmitting connection to the tower (5) of an offshore wind energy plant and for the craneless conveyance of at least the tower (5), and preferably of a complete offshore wind energy plant, into a locked position on the transport device (1, 1').

6. A transport device in accordance with any one of the preceding claims, **characterised in that** it has a plurality of vertically adjustable lifting legs (2) via which, for the transfer and takeover of a gondola unit (13), the vertical position of the leader unit (3, 3c, 9; 3') is matchable to the vertical position of an installation region provided at the tower (5) for the gondola unit (13).

7. A transport device in accordance with any one of the preceding claims, **characterised in that** it is self-propelled.

8. A transport device in accordance with any one of the preceding claims, **characterised in that** it is made as a buoyant lift platform.

9. A method for the seaside transport and for the landside and seaside transfer and takeover of completed gondola units (13) including in each case a machinery pod (11), a hub (15) and rotor blades (12) at standing offshore wind energy plants comprising the steps of
- a buoyant lift platform (1; 1) being brought into a respectively required position and to the respectively required height level;
- a receiving and holding device (14) at a leader unit (3, 3c, 9; 3') provided on the lift platform (1; 1) being moved from a lower transport position into an upper transfer and takeover position; and
- a towerless gondola unit (13) to be transported away in a craneless manner being taken over by means of the receiving and holding device (14) or a towerless gondola unit (13) to be transported in being transferred to a gondola-free tower (5) of an offshore wind energy plant.
